# EUROPÄISCHE PATENTANMELDUNG

(11) **EP 3 556 905 A1**
(43) Veröffentlichungstag der Anmeldung: **23.10.2019**
(21) Anmeldenummer: 18168178.4
(22) Anmeldetag: 19.04.2018
(51) Int. Cl.: C25B 15/02, C25B 1/10, C25B 9/04

(54) **SCHALTUNGSANORDNUNG, VERFAHREN ZUM BETRIEB EINER SCHALTUNGSANORDNUNG UND ELEKTROLYSEEINRICHTUNG**

(71) Anmelder: Siemens Aktiengesellschaft, 80333 München (DE)
(72) Erfinder: Utz, Peter, 90762 Fürth (DE)

(57) **Zusammenfassung**

Schaltungsanordnung zur Gleichstromversorgung mehrerer parallel Elektrolyseure (2, 3), wobei die Schaltungsanordnung einen Gleichrichter (6) umfasst, welcher eine eingangsseitige Wechselspannung in eine ausgangsseitige erste Gleichspannung (8) wandelt, wobei jeder Elektrolyseur (2, 3) jeweils über einen die erste Gleichspannung (8) in eine zweite Gleichspannung (11, 12) wandelnden Abwärtswandler (4, 5) derart parallel zum Ausgang des Gleichrichters (6) geschaltet ist, dass die zweite Gleichspannung (11, 12) über dem Elektrolyseur (2, 3) abfällt, wobei jeder der Abwärtswandler (4, 5) zur Anpassung einer Höhe seiner zweiten Gleichspannung (11, 12) steuerbar und/oder regelbar ist.

## Beschreibung

Die Erfindung betrifft eine Schaltungsanordnung zur Gleichstromversorgung mehrerer parallel geschalteter Elektrolyseure. Weiterhin betrifft die Erfindung ein Verfahren zum Betrieb einer solchen Schaltungsanordnung sowie eine Elektrolyseeinrichtung.

Elektrolysen, also Prozesse, in denen eine chemische Reaktion mit Hilfe von elektrischem Strom hervorgerufen wird, kommen in vielen technischen Gebieten zum Einsatz und dienen beispielsweise der Gewinnung von verschiedenen Stoffen. Beispielsweise können durch die Elektrolyse von Wasser Wasserstoff und Sauerstoff gewonnen werden. Für den Betrieb von Elektrolysevorrichtungen, auch Elektrolysestacks oder Elektrolyseure genannt, ist es, insbesondere bei großtechnischem Maßstab, wünschenswert, wenn diese möglichst energieeffizient und möglichst sicher betrieben werden können.

Es ist bisher bekannt, dass mehrere Elektrolyseure dazu in Reihe geschaltet werden, wobei die Elektrolyseure jeweils über einen eigenen galvanisch getrennten Kreis aus einem Transformator mit Stufenschalter zur Grobregelung der Elektrolyseure sowie einem Gleichrichter mit Thyristorschaltung zur Feinregelung der Elektrolyseure versorgt werden, was eine sehr aufwändige Umsetzung darstellt. Alternativ dazu ist es zur Reduktion des Schaltungsaufwands auch bekannt, dass die Elektrolyseure parallel geschaltet und aus über einen Gleichrichter betrieben werden, wobei es jedoch zu einer Stromaufteilung nach den Widerstandsverhältnissen der Elektrolyseure und somit zu einem großen Derating sowie der Gefahr eines Betriebes eines oder mehrerer Elektrolyseure außerhalb ihrer sicheren Betriebsbereiche kommen kann.

Der Erfindung liegt die Aufgabe zugrunde, eine verbesserte Schaltungsanordnung zur Gleichstromversorgung mehrerer parallel geschalteter Elektrolyseure anzugeben.

Zur Lösung dieser Aufgabe ist erfindungsgemäß vorgesehen, dass die Schaltungsanordnung einen Gleichrichter umfasst, welcher eine eingangsseitige Wechselspannung in eine ausgangsseitige erste Gleichspannung wandelt, wobei jeder Elektrolyseur jeweils über einen die erste Gleichspannung in eine zweite Gleichspannung wandelnden Abwärtswandler derart parallel zum Ausgang des Gleichrichters geschaltet ist, dass die zweite Gleichspannung über dem Elektrolyseur abfällt, wobei jeder der Abwärtswandler zur Anpassung einer Höhe seiner zweiten Gleichspannung steuerbar und/oder regelbar ist.

Der Vorteil der erfindungsgemäßen Lösung besteht darin, dass die parallel geschalteten Elektrolyseure jeweils über einen zwischengeschalteten Abwärtswandler durch die von dem Gleichrichter erzeugte erste Gleichspannung betrieben werden, wobei eine Einstellung der zum Betrieb des Elektrolyseurs eingesetzten zweiten Gleichspannung durch eine Steuerung und/oder eine Regelung der Abwärtswandler ermöglicht wird. Auf diese Weise können alle Elektrolyseure in einem eigenen Arbeitspunkt betrieben werden, welcher auf diese Weise immer in einem sicheren Betriebsbereich (safe operation area) gehalten werden kann.

Die Erfindung verwendet durch den die erste Gleichspannung erzeugenden Gleichrichter vorteilhaft nur eine zentrale Einspeisung des Gleichstroms, was den Aufwand der Schaltung verglichen mit einer Reihenschaltung der Elektrolyseure erheblich verringert. Durch die den erfindungsgemäßen Einsatz der steuerbar und/oder regelbar ausgeführten Abwärtswandler für jeden Elektrolyseur kann jedoch vorteilhaft auch bei der Parallelschaltung der Elektrolyseure eine Anpassung des Stromflusses durch jeden Elektrolyseur vorgenommen werden. Die bei einem Betrieb der Elektrolyseure ohne die Abwärtswandler auftretenden Probleme, wie eine Stromaufteilung nach den Widerstandsverhältnissen der Elektrolyseure sowie ein sich daraus ergebendes, großes Derating und/oder die Gefahr des Betriebes eines Elektrolyseurs außerhalb seines sicheren Betriebsbereichs, können somit durch die erfindungsgemäße Schaltungsanordnung vermieden werden. Durch die Steuerbarkeit und/oder die Regelbarkeit der Abwärtswandler kann ein somit vorteilhaft ein sicherer und effizienterer Betrieb der Schaltungsanordnung und somit der Elektrolyseure insbesondere auch bei sich ändernden Widerstandsverhältnissen der Elektrolyseure erreicht werden. Effekte, welche zu einer Widerstandsveränderung der Elektrolyseure führen können, wie beispielsweise eine Alterung der Elektrolyseure und/oder temperaturbedingte Effekte, können durch die Steuerbarkeit und/oder Regelbarkeit der Elektrolyseure berücksichtigt bzw. kompensiert werden.

Gegenüber einer Reihenschaltung von Elektrolyseuren, welche jeweils über einen eigenen galvanisch getrennten Kreis aus einem Transformator mit Stufenschalter zur Grobregelung sowie einem Gleichrichter mit Thyristorschaltung zur Feinregelung versorgt werden, ergibt sich bei der erfindungsgemäßen Schaltungsanordnung der Vorteil, dass der Gleichrichter durch einen einfachen Stromrichtertransformator ohne Stufenschalter versorgt werden kann. Weiterhin können durch die Verwendung eines einzelnen Transformators anstelle mehrerer kleinerer Transformatoren die Eisenverluste im Transformator reduziert werden. Durch die erfindungsgemäße Schaltungsanordnung ergibt sich eine besonders kompakte Bauweise der Gleichstromversorgung der Elektrolyseure. Dies hat eine Reduktion des für einen Anschluss bzw. eine Verschienung der Elektrolyseure eingesetzten Materials, beispielsweise Kupfer oder Aluminium, zur Folge.

Zur Steuerung und/oder Regelung der Abwärtswandler kann die Schaltungsanordnung beispielsweise eine Recheneinheit umfassen, welche den Abwärtswandlern verbunden ist.

Für eine Verbesserung der Energieeffizienz der Schaltungsanordnung kann erfindungsgemäß vorgesehen sein, dass die Schaltungsanordnung mehrere Schalter umfasst, wobei jeder Abwärtswandler durch jeweils einen Schalter überbrückbar ist. Bei einer Überbrückung eines Abwärtswandlers fällt die erste Gleichspannung komplett über dem mit dem überbrückten Abwärtswandler verbundenen Elektrolyseur ab. Bei überbrückten Abwärtswandlern entspricht also die zweite Gleichspannung der ersten Gleichspannung. Ein Betrieb des Abwärtswandlers derart, dass die zweite Gleichspannung, also die Ausgangsspannung des Abwärtswandlers, möglichst gleichgroß ist wie die erste Gleichspannung, also die Eingangsspannung des Abwärtswandlers, kann durch die Überbrückung des Abwärtswandlers ersetzt werden, so dass die Verluste, welche bei einem derartigen Betrieb des Abwärtswandlers entstehen würden, vermieden werden können. Vorteilhaft können so für einen besonders energieeffizienten Betrieb der erfindungsgemäßen Schaltungsanordnung nur die Elektrolyseure mit den geringsten Widerständen über den Abwärtswandler versorgt werden, wohingegen die anderen direkt über die erste Gleichspannung versorgt werden. Die Ansteuerung der Schalter kann beispielsweise durch eine Recheneinrichtung der Schaltungsanordnung erfolgen, wobei die Recheneinrichtung insbesondere auch zur Steuerung und/oder Regelung der Abwärtswandler ausgebildet sein kann.

Für die Abwärtswandler kann erfindungsgemäß vorgesehen sein, dass jeder Abwärtswandler wenigstens eine Speicherdrossel und wenigstens einen Transistor umfasst, welche in Reihe zu dem mit dem Abwärtswandler verbundenen Elektrolyseur geschaltet sind. Weiterhin kann der Abwärtswandler eine Diode umfassen, welche parallel zu dem mit dem Abwärtswandler verbundenen Elektrolyseur geschaltet ist. Der Transistor des Abwärtswandlers wirkt dabei als Schalter, wobei durch eine Ansteuerung des Transistors eine Steuerung und/oder eine Regelung der Ausgangsspannung des Abwärtswandlers, also seiner zweiten Gleichspannung, erfolgen kann. Beispielsweise kann eine Steuerung und/oder eine Regelung der Ausgangsspannung mittels Pulsweitenmodulation erfolgen, wobei die Ausgangsspannung vom Tastgrad, mithin also von einem Verhältnis zwischen leitendem und sperrendem Zustand des Transistors innerhalb eines Zeitintervalls, abhängig ist. Jeder Abwärtswandler umfasst einen eigenen Transistor, so dass die von jedem Abwärtswandler zur Versorgung des Elektrolyseurs bereitgestellte zweite Gleichspannung individuell einstellbar und somit auch individuell steuerbar und/oder regelbar ist.

In einer bevorzugten Ausgestaltung der Erfindung kann vorgesehen sein, dass der Gleichrichter zur Anpassung einer Höhe der ersten Gleichspannung steuerbar und/oder regelbar ist. Durch eine Steuerung und/oder Regelung des Gleichrichters kann die Höhe der von ihm erzeugten ersten Gleichspannung angepasst werden. Da die erste Gleichspannung die Eingangsspannung der parallel geschalteten Abwärtswandler darstellt, führt eine Änderung der ersten Gleichspannung auch zu einer Änderung der zweiten Gleichspannung. Eine gleichzeitige Regelbarkeit oder Steuerbarkeit von Gleichrichter und Abwärtswandlern bietet den Vorteil, dass beispielsweise die Speicherdrosseln der Abwärtswandler mit einer geringeren Baugröße ausgeführt sein können, da aufgrund der Steuerbarkeit bzw. Regelbarkeit des Gleichrichters die erste Gleichspannung zumindest innerhalb eines gewissen Spannungsbereichs regelbar ist, sodass die Abwärtswandler ebenfalls nur innerhalb eines geringeren Spannungsbereichs regelbar sein müssen, ohne dass es insgesamt zu einer Einschränkung des zur Verfügung stehenden Spannungsbereichs bei einer Anpassung der zweiten Gleichspannung kommt. Insbesondere ist es möglich, dass durch eine Steuerung oder Regelung des Gleichrichters eine gröbere, alle Elektrolyseure betreffende Anpassung der ersten Gleichspannung erfolgen kann und durch eine Steuerung und/oder Regelung der Abwärtswandler eine feinere Anpassung der jeweils einen der Elektrolyseure speisenden zweiten Gleichspannungen erfolgen kann.

Der Einsatz eines regelbaren Gleichrichters bietet weiterhin den Vorteil, dass der Gleichrichter an einen einfachen Stromrichtertransformator angeschlossen werden kann und kein regelbarer Transformator, beispielsweise ein Transformator mit Stufenschalter, verwendet werden muss.

Erfindungsgemäß kann vorgesehen sein, dass der Gleichrichter einen Thyristorsatz umfasst. Der Thyristorsatz des Gleichrichters erlaubt dabei die Regelung der von dem Gleichrichter erzeugten ersten Gleichspannung zumindest in einer gewissen Größenordnung. Bei einem Gleichrichter mit Thyristorsatz kann die von dem Gleichrichter erzeugte erste Gleichspannung beispielsweise über den Zündzeitpunkt der Thyristoren des Thyristorensatzes geregelt werden.

In einer bevorzugten Ausführung der Erfindung ist vorgesehen, dass die Schaltungsanordnung einen Kondensator umfasst, welcher parallel zum Ausgang des Gleichrichters geschaltet ist. Durch diesen Kondensator kann die Energie, welche dem Gleichspannungswandler entnommen werden kann, gepuffert werden. Der Kondensator wirkt somit stabilisierend auf die erste Gleichspannung, was sich vorteilhaft auf eine Steuerung bzw. Regelung des Gleichrichters und/oder der Abwärtswandler auswirkt.

Zum Betrieb des Gleichrichters kann erfindungsgemäß vorgesehen sein, dass der Gleichrichter eingangsseitig mit einer Sekundärwicklung eines Transformators verbunden ist, welche eine an einer Primärwicklung des Transformators anliegende erste Wechselspannung in eine an der Sekundärwicklung anliegende zweite Wechselspannung wandelt. Dabei stellt die zweite Wechselspannung die eingangsseitige Wechselspannung des Gleichrichters dar. Sowohl die erste Wechselspannung als auch die zweite Wechselspannung können eine Hochspannung sein. Beispielsweise ist es möglich, dass eine erste Wechselspannung in einem Spannungsbereich zwischen 6 kV bis 100 kV eingesetzt wird. Die zweite Wechselspannung kann beispielsweise zwischen 100 V und 1 kV betragen. Abhängig von der Ausgestaltung des Transformators und/oder von den Erfordernissen des Gleichrichters ist es selbstverständlich auch möglich, eine erste Wechselspannung und eine zweite Wechselspannung in anderen Spannungsbereichen einzusetzen.

Weiterhin kann erfindungsgemäß vorgesehen sein, dass der Transformator eine Tertiärwicklung umfasst, welche mit einem passiven Filter verbunden ist. Der passive Filter kann dabei beispielsweise wenigstens eine Spule und/oder wenigstens einen Kondensator umfassen und derart angepasst sein, dass wenigstens eine Oberschwingung des Gleichrichters gefiltert wird. Die wenigstens eine Oberschwingung des Gleichrichters kann sich beispielsweise aus einer Ansteuerfrequenz ergeben, mit der eine oder mehrere schaltbare Komponenten des Gleichrichters angesteuert werden.

Für eine erfindungsgemäße Elektrolyseeinrichtung ist vorgesehen, dass diese wenigstens eine erfindungsgemäße Schaltungsanordnung sowie mehrere Elektrolyseure umfasst, wobei die Elektrolyseure jeweils wenigstens eine Protonen-Austausch-Membran umfassen. Dabei kann es sich insbesondere um Protonen-Austausch-Membranen zur Erzeugung von Wasserstoff durch die Elektrolyse von Wasser, insbesondere von deionisiertem und/oder destilliertem Wasser, handeln. Die Elektrolyseure können insbesondere auch als mehrere Protonen-Austausch-Membranen umfassende Elektrolysestacks ausgeführt werden. Die Elektrolyseeinrichtung kann, abhängig von der Leistungsfähigkeit des Gleichrichters bzw. abhängig von einer maximal über den Gleichrichter zu beziehenden Stromstärke, eine beliebige Anzahl von parallel geschalteten Elektrolyseuren umfassen.

Für ein erfindungsgemäßes Verfahren zum Betrieb einer erfindungsgemäßen Schaltungsanordnung ist vorgesehen, dass die zweiten Gleichspannungen in Abhängigkeit einer von wenigstens einem der Elektrolyseure durch Elektrolyse erzeugten Stoffmenge und/oder von einem Arbeitspunkt wenigstens eines der Elektrolyseure gesteuert und/oder geregelt werden. Eine Regelung und/oder Steuerung der zweiten Gleichspannungen erfolgt dabei, wie bereits für die Schaltungsanordnung beschrieben, durch eine Regelung und/oder Steuerung des jeweiligen Abwärtswandlers. Die Regelung der zweiten Gleichspannungen kann beispielsweise in Abhängigkeit einer von allen oder einer von wenigstens einem der Elektrolyseure erzeugten Stoffmenge erfolgen. Im Falle einer Wasserelektrolyse kann es sich bei der Stoffmenge beispielsweise um die von dem oder den Elektrolyseuren erzeugte Wasserstoffmenge handeln. Zusätzlich oder alternativ dazu ist es möglich, dass die Regelung der zweiten Gleichspannungen in Abhängigkeit eines Arbeitspunktes wenigstens eines der Elektrolyseure erfolgt. Der Arbeitspunkt kann beispielsweise durch den Widerstand des Elektrolyseurs und/ oder durch einen Stromfluss durch den Elektrolyseur bestimmt werden. Der Stromfluss durch den Elektrolyseur hängt dabei von seinem Widerstand sowie von der Höhe der über dem Elektrolyseur abfallenden zweiten Gleichspannung ab.

Weiterhin kann erfindungsgemäß vorgesehen sein, dass die Schaltungsanordnung mehrere Schalter umfasst, wobei jeder Abwärtswandler durch jeweils einen Schalter überbrückbar ist, wobei die Schalter in Abhängigkeit einer von wenigstens einem der Elektrolyseure durch Elektrolyse erzeugten Stoffmenge und/oder von einem Arbeitspunkt wenigstens eines der Elektrolyseure angesteuert werden. Die Ansteuerung der Schalter kann dabei als Teil der Regelung der zweiten Gleichspannung erfolgen, wobei das Schließen eines Schalters ein Überbrücken des jeweiligen Abwärtswandlers ermöglicht. Bei einem überbrückten Abwärtswandler entspricht die über dem dem Abwärtswandler zugeordneten Elektrolyseur abfallende zweite Gleichspannung der von dem Gleichrichter erzeugten ersten Gleichspannung. Dies ermöglicht es, dass nur die Elektrolyseure mit dem geringsten Widerstand durch den Abwärtswandler versorgt werden, wohingegen die weiteren Elektrolyseure direkt von dem Gleichrichter über die erste Gleichspannung versorgt werden. Zur Ansteuerung der Schalter kann vorgesehen sein, dass die Schaltungsanordnung eine Recheneinrichtung umfasst, durch welche die Schalter ansteuerbar sind. Weiterhin kann durch die Recheneinrichtung beispielsweise über geeignete Messmittel auch eine Stoffmenge und/oder ein Widerstand eines oder mehrerer Elektrolyseure bzw. ein Stromfluss durch einen oder mehrere Elektrolyseure bestimmt werden und auf Grundlage dieser Größen eine Steuerung und/oder Regelung der Abwärtswandler erfolgen.

Erfindungsgemäß kann vorgesehen sein, dass der Gleichrichter zur Anpassung einer Höhe der ersten Gleichspannung gesteuert und/oder geregelt wird. Insbesondere ist es möglich, dass durch eine Steuerung oder Regelung des Gleichrichters eine gröbere, alle Elektrolyseure betreffende Anpassung der ersten Gleichspannung erfolgen kann und durch eine Steuerung und/ oder Regelung der Abwärtswandler eine feinere Anpassung der jeweils einen der Elektrolyseure speisenden zweiten Gleichspannungen erfolgen kann. Selbstverständlich kann auch die Steuerung und/oder die Regelung des Gleichrichters in Abhängigkeit einer von allen oder einer von wenigstens einem der Elektrolyseure erzeugten Stoffmenge und/oder in Abhängigkeit eines Arbeitspunktes wenigstens eines der Elektrolyseure erfolgen.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: ein schematisches Blockdiagramm einer erfindungsgemäßen Schaltungsanordnung, und
- Fig. 2: einen schematischen Schaltplan einer erfindungsgemäßen Schaltungsanordnung.

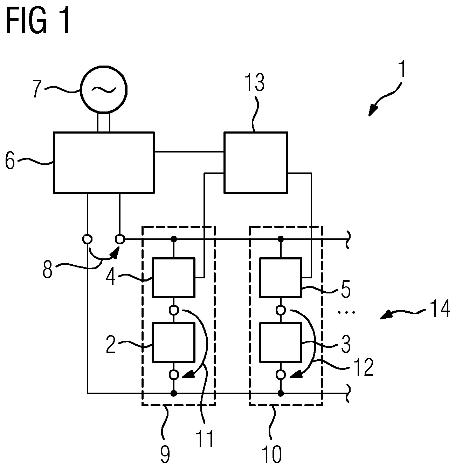

In Fig. 1 ist eine schematische Darstellung einer erfindungsgemäßen Schaltungsanordnung 1 abgebildet. Die Schaltungsanordnung 1 dient zur Gleichstromversorgung mehrerer parallel geschalteter Elektrolyseure 2, 3, wobei die Elektrolyseure 2, 3 jeweils über einen Abwärtswandler 4, 5 parallel zum Ausgang eines Gleichrichters 6 geschaltet sind. Der Gleichrichter 6 wandelt eine eingangsseitig anliegende Wechselspannung 7 in eine erste Gleichspannung 8 um. Diese erste Gleichspannung 8 fällt über den jeweils einen der Elektrolyseure 2, 3 sowie einen der Abwärtswandler 4, 5 umfassenden Zweigen 9, 10 ab.

Die erste Gleichspannung 8 wird durch den Abwärtswandler 4 in die zweite Gleichspannung 11 umgewandelt, welche über dem Elektrolyseur 2 abfällt. Entsprechend wird die erste Gleichspannung 8 ebenfalls durch den zweiten Abwärtswandler 5 in die zweite Gleichspannung 12 umgewandelt, welche über dem Elektrolyseur 3 abfällt. Zusätzlich zu den beiden dargestellten Elektrolyseuren 2, 3 kann die Schaltungsanordnung selbstverständlich auch zur Gleichspannungsversorgung weiterer Elektrolyseure dienen, welche entsprechend ebenfalls über jeweils einen Abwärtswandler als weiterer Zweig parallel zum Ausgang des Gleichrichters 6 geschaltet werden.

Um die Elektrolyseure 2, 3 in einem gewünschten Arbeitspunkt, welcher beispielsweise innerhalb eines sicheren Betriebsbereiches liegt, betreiben zu können, sind die Abwärtswandler 4, 5 zur Anpassung einer Höhe der zweiten Gleichspannung 11 bzw. 12 steuerbar und/oder regelbar. Zusätzlich dazu kann auch der Gleichrichter 6 zur Anpassung einer Höhe der ersten Gleichspannung 8 steuerbar und/oder regelbar sein. sein. Insbesondere kann vorgesehen sein, dass sowohl der Gleichrichter 6 als auch die Abwärtswandler 4, 5 sowie gegebenenfalls vorhandene weitere Abwärtswandler weiterer Zweige steuerbar oder regelbar sind. Zur Steuerung bzw. Regelung des Gleichrichters 6 und/oder der Abwärtswandler 4, 5 kann die Schaltungsanordnung 1 beispielsweise eine Recheneinrichtung 13 umfassen, über welche der Gleichrichter 6 und/oder die Abwärtswandler 4, 5 angesteuert bzw. geregelt werden können. Die Recheneinrichtung 13 kann dazu mit einer oder mehreren Messmittel (hier nicht dargestellt) verbunden sein, über welche beispielsweise eine von einem der Elektrolyseure 2, 3 erzeugte Stoffmenge, ein jeweiliger Widerstand eines oder mehrerer der Elektrolyseure 2, 3 und/oder ein jeweiliger Stromfluss durch einen oder mehrere der Elektrolyseure 2, 3 gemessen werden kann. Die Steuerung und/oder Regelung des Gleichrichters 6 zur Anpassung der Höhe der ersten Gleichspannung 8 bzw. eine Steuerung oder Regelung der Abwärtswandler 4, 5 zur Anpassung der Höhe der zweiten Gleichspannungen 11, 12 kann dabei beispielsweise in Abhängigkeit der bestimmten Stoffmenge und/oder in Abhängigkeit des jeweiligen Widerstandes der Elektrolyseure 2, 3 und/oder des jeweiligen Stromflusses durch die Elektrolyseure 2, 3 erfolgen. Dies gilt entsprechend auch für weitere Elektrolyseure sowie weitere Abwärtswandler, welche zusätzlich zu den Zweigen 9, 10 vorhanden sein können. Die Abwärtswandler 4, 5 sowie gegebenenfalls vorhandene, weitere Abwärtswandler sind Bestandteil der Schaltungsanordnung 1, an die die Elektrolyseure 2, 3 sowie gegebenenfalls vorhandene, weitere Elektrolyseure angeschlossen werden können. Eine erfindungsgemäße Elektrolyseeinrichtung 14 umfasst zusätzlich zu der Schaltungsanordnung 1 auch alle mit ihr verbundenen Elektrolyseure. Diese können beispielsweise jeweils wenigstens eine Protonen-Austausch-Membran umfassen, wobei die Protonen-Austausch-Membran insbesondere zur Erzeugung von Wasserstoff durch die Elektrolyse von deionisiertem und/oder destilliertem Wasser ausgebildet ist.

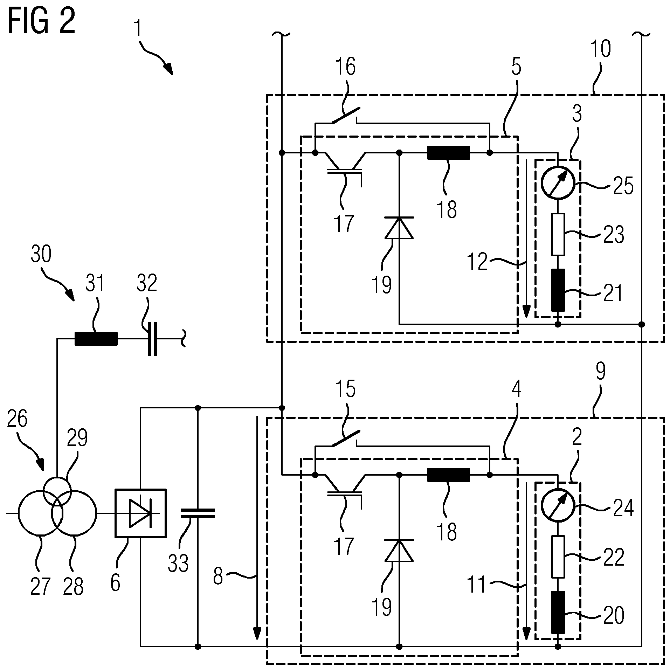

In Fig. 2 ist ein schematisches Schaltbild einer erfindungsgemäßen Schaltungsanordnung 1 dargestellt. Der Zweig 9 umfasst entsprechend der Abbildung in Fig. 1 den Elektrolyseur 2 sowie den Abwärtswandler 4. Weiterhin umfasst der Zweig 9 in diesem Ausführungsbeispiel einen Schalter 15 der Schaltungsanordnung 1, mit dem der Gleichspannungswandler 4 überbrückt werden kann. Der Zweig 10 umfasst entsprechend den Elektrolyseur 3 sowie den Abwärtswandler 5 und den Schalter 16 der Schaltungsanordnung 1.

Die Abwärtswandler 4, 5 umfassen jeweils einen Transistor 17, eine Speicherdrossel 18 sowie eine Diode 19. Die Transistoren 17 sowie die Speicherdrosseln 18 sind dabei jeweils in Reihe zu dem jeweils über den Abwärtswandler versorgten Elektrolyseur 2 bzw. 3 angeordnet. Die Dioden 19 sind entsprechend jeweils parallel zu dem jeweiligen Elektrolyseur 2, 3 geschaltet. Über den Transistor 17 kann die jeweils von dem Abwärtswandler 4 bzw. 5 bereitgestellte, über dem Elektrolyseur 2 bzw. 3 abfallende zweite Gleichspannung 11, 12 in ihrer Höhe geregelt werden. Dazu können die Transistoren 17 beispielsweise mit der Recheneinrichtung 13 (hier nicht dargestellt) verbunden sein, wobei die entsprechende Ansteuerung zur Regelung und/oder Steuerung der Abwärtswandler 4, 5 über die Recheneinrichtung 13 erfolgt. Weiterhin ist es möglich, dass die Schalter 15, 16, insbesondere ebenfalls über die Recheneinrichtung 13, ansteuerbar sind, so dass bei geschlossenem Schalter 15, 16 die Abwärtswandler 4, 5 überbrückt werden. Bei überbrücktem Abwärtswandler 4, 5, also bei geschlossenem Schalter 15, 16, fällt die von dem Gleichrichter 6 erzeugte erste Gleichspannung 8 direkt über dem Elektrolyseur 2 bzw. 3 ab, die Elektrolyseure werden also aus einem Zwischenkreis der ersten Gleichspannung 8 versorgt.

Der Gleichrichter 6 umfasst in diesem Ausführungsbeispiel einen Thyristorsatz, so dass durch eine Ansteuerung des Gleichrichters 6 die Höhe der ersten Gleichspannung 8 angepasst werden kann. Zur Stabilisierung der vom Gleichrichter 6 erzeugten ersten Gleichspannung 8 ist weiterhin ein Kondensator 33 vorgesehen, welcher parallel zum Ausgang des Gleichrichters 6 geschaltet ist. Durch die Möglichkeit, bereits durch eine Anpassung der Höhe der ersten Gleichspannung 8 Einfluss auf die Höhe der zweiten Gleichspannungen 11, 12 nehmen zu können, kann die Größe der Speicherdrosseln 18 in den Abwärtswandlern 4, 5 gering gehalten werden.

Die an die Schaltungsanordnung 1 angeschlossenen Elektrolyseure 2, 3 umfassen beispielsweise eine Protonen-Austausch-Membran, von denen in Fig. 2 als Ersatzschaltbild jeweils eine Induktivität 20, 21 sowie ein Widerstand 22, 23 dargestellt ist. Die Elektrolyseure 2, 3 werden über die von der Schaltungsanordnung 1 bereitgestellten zweiten Gleichspannungen 11, 12 gespeist und dienen der Erzeugung eines oder mehrerer Stoffe durch Elektrolyse. Den Elektrolyseuren 2, 3 kann jeweils lein Messmittel 24, 25 zugeordnet werden, über welches beispielweise der Stromfluss durch den jeweiligen Elektrolyseur 2, 3 gemessen werden kann. Abhängig von dem durch die Messmittel 24, 25 gemessenen Stromfluss kann eine Steuerung und/oder Regelung des Gleichrichters 6 und/oder der Abwärtswandler 4, 5 vorgenommen werden.

In diesem Ausführungsbeispiel ergibt sich eine Regelbarkeit des Gleichrichters 6 beispielsweise durch die Wahl eines Zündzeitpunkts der Thyristoren des Thyristorensatzes des Gleichrichters 6. Eine Anpassung der von den Abwärtswandlern 4, 5 erzeugten zweiten Gleichspannungen 11, 12 kann zusätzlich durch ein Ansteuern der Transistoren 17, beispielsweise durch Pulsweitenmodulation, erfolgen. Zusätzlich oder alternativ zu einer Strommessung können die Messmittel 24, 25 auch die über dem jeweiligen Elektrolyseur 2, 3 abfallende Spannung und/oder seinen Widerstand bestimmen, wobei eine Regelung des Gleichrichters 6 und/oder der Abwärtswandler 4, 5 zusätzlich oder alternativ auch in Abhängigkeit einer dieser Größen erfolgen kann. Im Betrieb kann es zu einer Veränderung der Widerstände 22, 23 der Elektrolyseure 2, 3 kommen. Grund für eine solche Widerstandsänderung können beispielsweise Alterungseffekte des Elektrolyseurs 2,3 und/oder Temperaturveränderungen oder Ähnliches sein. Durch den erfindungsgemäß vorgesehenen Betrieb der Schaltungsanordnung 1 können solche Effekte durch eine Anpassung der Höhe der ersten Gleichspannung 8 durch eine Steuerung und/oder Regelung des Gleichrichters 6 und/oder durch eine Anpassung der Höhe der zweiten Gleichspannung 11, 12 durch eine Steuerung und/oder Regelung der Abwärtswandlern 4, 5 kompensiert werden.

Die Stromversorgung des Gleichrichters 6 erfolgt in diesem Ausführungsbeispiel über einen Transformator 26, welcher eine an einer Primärwicklung 27 anliegende erste Wechselspannung in einer an einer Sekundärwicklung 28 anliegende zweite Wechselspannung umwandelt. Sowohl bei der ersten Wechselspannung als auch bei der zweiten Wechselspannung kann es sich um eine Hochspannung handeln. Es ist beispielsweise möglich, dass an der Primärwicklung eine erste Wechselspannung in einem Bereich zwischen 6 kV und 100 kV anliegt, welche zu einer an der Sekundärwicklung 28 anliegenden zweiten Wechselspannung in einem Spannungsbereich zwischen 100 V und 1 kV transformiert wird. Der Transformator 26 umfasst weiterhin eine Tertiärwicklung 29, an die ein passiver Filter 30 angeschlossen ist. Der passive Filter 30 umfasst eine Induktivität 31 sowie eine Kapazität 32. Der Filter 30 kann derart angepasst sein, dass er wenigstens eine von dem Gleichrichter 6 erzeugte Oberschwingung, welche beispielsweise durch das Schalten des Thyristorsatzes und/oder einer oder mehrerer anderer schaltbarer Komponenten des Gleichrichters 6 erzeugt wird, abdämpft. Eine derartige Abdämpfung durch den Filter 30 wirkt sich vorteilhaft auf die Steuerung und/oder Regelung der ersten Gleichspannung 8 oder der zweiten Gleichspannungen 11, 12 aus.

Die Elektrolyseure 2, 3 können beispielsweise zur Erzeugung von Wasserstoff durch eine Wasserelektrolyse eingesetzt werden. Es sind jedoch auch andere Einsatzzwecke, wie beispielsweise bei einer Chloralkalielektrolyse, denkbar.

Eine weitere Möglichkeit zur Steuerung und/oder Regelung der ersten Gleichspannung 8 und/oder der zweiten Gleichspannungen 11, 12 ergibt sich bei einer Regelung auf einen jeweiligen Arbeitspunkt der Elektrolyseure 2, 3. Dieser Arbeitspunkt kann beispielsweise von der durch die Elektrolyse zu erzeugenden Stoffmenge abhängig sein. In diesem Fall können zusätzliche Messmittel vorgesehen sein (hier nicht dargestellt), welche eine aktuell über die jeweiligen Elektrolyseure 2, 3 erzeugte Stoffmenge messen, wobei anschließend beispielsweise über die Recheneinrichtung 13 eine Steuerung und/oder Regelung des Gleichrichters 6 und/oder der Abwärtswandler 4, 5 erfolgen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schaltungsanordnung zur Gleichstromversorgung mehrerer parallel geschalteter Elektrolyseure (2, 3), wobei die Schaltungsanordnung einen Gleichrichter (6) umfasst, welcher eine eingangsseitige Wechselspannung in eine ausgangsseitige erste Gleichspannung (8) wandelt, wobei jeder Elektrolyseur (2, 3) jeweils über einen die erste Gleichspannung (8) in eine zweite Gleichspannung (11, 12) wandelnden Abwärtswandler (4, 5) derart parallel zum Ausgang des Gleichrichters (6) geschaltet ist, dass die zweite Gleichspannung (11, 12) über dem Elektrolyseur (2, 3) abfällt, wobei jeder der Abwärtswandler (4, 5) zur Anpassung einer Höhe seiner zweiten Gleichspannung (11, 12) steuerbar und/oder regelbar ist.

2. Schaltungsanordnung nach Anspruch 1, **dadurch gekennzeichnet, dass** die Schaltungsanordnung (1) mehrere Schalter (15, 16) umfasst, wobei jeder Abwärtswandler (4, 5) durch jeweils einen Schalter (15, 16) überbrückbar ist.

3. Schaltungsanordnung nach Anspruch 1 oder 2, **dadurch gekennzeichnet, dass** jeder Abwärtswandler (4, 5) wenigstens eine Speicherdrossel (18) und wenigstens einen Transistor (17) umfasst, welche in Reihe zu dem mit dem Abwärtswandler (4, 5) verbundenen Elektrolyseur (2, 3) geschaltet sind.

4. Schaltungsanordnung nach einem der vorangehenden Ansprüche, **dadurch gekennzeichnet, dass** der Gleichrichter (6) zur Anpassung einer Höhe der ersten Gleichspannung (8) steuerbar und/oder regelbar ist.

5. Schaltungsanordnung nach einem der vorangehenden Ansprüche, **dadurch gekennzeichnet, dass** der Gleichrichter (6) einen Thyristorsatz umfasst.

6. Schaltungsanordnung nach einem der vorangehenden Ansprüche, **dadurch gekennzeichnet, dass** die Schaltungsanordnung (1) einen Kondensator (33) umfasst, welcher parallel zum Ausgang des Gleichrichters (6) geschaltet ist.

7. Schaltungsanordnung nach einem der vorangehenden Ansprüche, **dadurch gekennzeichnet, dass** der Gleichrichter (6) eingangsseitig mit einer Sekundärwicklung (28) eines Transformators (26) verbunden ist, welche eine an einer Primärwicklung (27) des Transformators (26) anliegende erste Wechselspannung in eine an der Sekundärwicklung (28) anliegende zweite Wechselspannung (11, 12) wandelt.

8. Schaltungsanordnung nach Anspruch 7, **dadurch gekennzeichnet, dass** der Transformator (26) eine Tertiärwicklung (29) umfasst, welche mit einem passiven Filter (30) verbunden ist.

9. Elektrolyseeinrichtung, umfassend wenigstens eine Schaltungsanordnung (1) nach einem der vorangehenden Ansprüche sowie mehrere Elektrolyseure (2, 3), wobei die Elektrolyseure (2, 3) jeweils wenigstens eine Protonen-Austausch-Membran umfassen.

10. Verfahren zum Betrieb einer Schaltungsanordnung (1)nach einem der vorangehenden Ansprüche, wobei die erste Gleichspannung (8) und/oder die zweiten Gleichspannungen (11, 12) in Abhängigkeit einer von wenigstens einem der Elektrolyseure (2, 3) durch Elektrolyse erzeugten Stoffmenge und/oder von einem Arbeitspunkt wenigstens eines der Elektrolyseure (2, 3) gesteuert und/oder geregelt werden.

11. Verfahren nach Anspruch 10, **dadurch gekennzeichnet, dass** die Schaltungsanordnung (1) mehrere Schalter (15, 16) umfasst, wobei jeder Abwärtswandler (4, 5) durch jeweils einen Schalter (15, 16) überbrückbar ist, wobei die Schalter (15, 16) in Abhängigkeit einer von wenigstens einem der Elektrolyseure (2, 3) durch Elektrolyse erzeugten Stoffmenge und/oder von einem Arbeitspunkt wenigstens eines der Elektrolyseure (2, 3) angesteuert werden.

12. Verfahren nach Anspruch 10 oder 11, **dadurch gekennzeichnet, dass** der Gleichrichter (6) zur Anpassung einer Höhe der ersten Gleichspannung (8) gesteuert und/oder geregelt wird.
